# EUROPEAN PATENT SPECIFICATION

(11) **EP 0 506 143 B1**
(45) Date of publication and mention of the grant of the patent: **19.04.1995**
(21) Application number: 92107885.3
(22) Date of filing: 02.12.1988
(51) Int. Cl.: G11B 15/675

(54) **Tape cassette loading mechanism in tape player**
Bandkassette-Lademechanismus in einem Bandwiedergabegerät
Mécanisme de chargement de cassette à bande dans un lecteur à bande

(30) Priority: 09.12.1987 JP 312805/87; 09.12.1987 JP 312806/87; 09.12.1987 JP 312807/87; 09.12.1987 JP 312808/87; 09.12.1987 JP 312809/87; 09.12.1987 JP 312810/87; 09.12.1987 JP 312811/87
(43) Date of publication of application: 30.09.1992
(62) Divisional of application: 88120120.6
(73) Proprietor: MITSUBISHI DENKI KABUSHIKI KAISHA, Tokyo 100 (JP)
(72) Inventor: Nakanishi, Yasuyuki, c/o Mitsubishi Denki K. K., Sanda-shi, Hyogo (JP)
(74) Representative: Eisenführ, Speiser & Partner

(56) References cited:
- EP-A- 0 240 922
- GB-A- 2 200 239
- US-A- 4 782 407

## Description

### BACKGROUND OF THE INVENTION

### Field of the Invention

The present invention relates to a tape cassette loading mechanism in a tape player for loading a recorded tape enclosed in a tape cassette to a playing position.

### Description of the Prior Art

Such a tape cassette loading mechanism is disclosed in EP-A- 177 133 which defines the closest prior art.

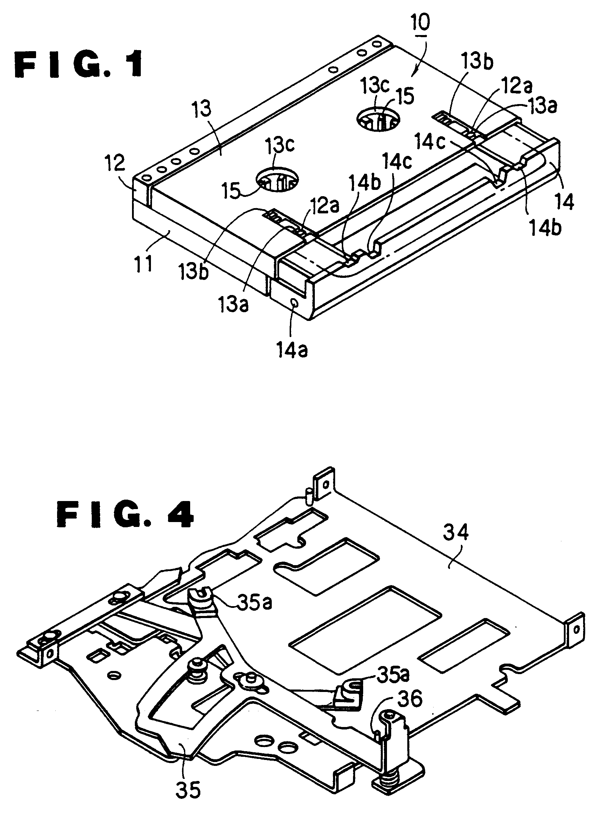

Fig. 1 shows an outline of a tape cassette used for a digital audio tape player. In the same figure, a tape cassette 10 is composed of upper and lower cases 11 and 12 for enclosing therein a magnetic tape wound round a pair of tape reels, a slider 13 mounted slidably over the outer peripheral surface of the lower case 12, and a lid 14 disposed in a front opening defined by the upper and lower cases 11 and 12. The lower case 12 is provided with downwardly projecting lugs 12a, while the slider 13 is formed with first retaining apertures 13a and second like apertures 13b for engagement with the lugs 12a to restrict the position of the slider 13. In a second position in which the lugs 12a are engaged with the second retaining apertures 13b, the slider 13 abuts the lid 14 to enclose the magnetic tape completely, while in a first position in which the lugs are engaged with the first retaining apertures 13a, the slider 13 is completely spaced away from the lid 14, permitting the lid 14 to pivot about fulcrums 14a thereof. The slider 13 is further formed with apertures 13c in opposed relation to reel hubs 15 of the reels with the magnetic tape wound thereon, through which apertures 13c are inserted reel rotating shafts. The slider 13 is urged in a direction of abutment with the lid 14 by means of a spring and the magnetic tape is disposed so as to travel along the inner peripheral surface of the lid 14 from the interior of the lower case 12 as indicated by a dot-dash line. Further, the lid 14 has grooves 14b formed in positions opposed to the lugs 12a at a depth substantially corresponding to the plate thickness of the slider 13 and also has grooves 14c formed at a depth not causing the magnetic tape to be exposed.

In recording or playback of information in the tape player using the tape cassette 10 constructed as above, it is necessary that the magnetic tape be exposed from the tape cassette 10 and brought into contact with the magnetic head. To this end it is necessary that the slider 13 be held in the first position and the lid 14 pivoted upon loading of the tape cassette 10.

For using such tape player as a player for an automobile, e.g. a passenger car, it is necessary to reduce the size of the entire apparatus because of a limited mounting space in the automobile.

### SUMMARY OF THE INVENTION

The present invention has been accomplished in view of the above-mentioned point and it is the object thereof to reduce the size of the tape cassette loading mechanism thereby providing a compact and light-weight tape player.

In order to achieve the above-mentioned object, a tape player according to the present invention, which is defined in claim 1, includes a U-shaped lower holder which supports a slider; a U-shaped upper holder formed separately from the lower holder to support an upper case; L-shaped arms mounted rotatably on the front end side of the upper holder; pins attached to the outsides of the arms; resilient members mounted on free end sides of the arms and engaged with the lower end face of the lid; and guide plates disposed along the side walls of the lower and upper holders and each having a stepped guide slot continuous through an inclined portion and also having a linear guide slot, the said pins being brought into the stepped guide slots of the guide plates, wherein the movement of the pins along the inclined portions of the stepped guide slots with movement of the holders causes the arms to pivot to open or close the lid.

Thus, in the said tape player according to the present invention, the pins attached to the arms are brought into engagement with the stepped guide slots and are guided along the inclined portions of the same slots, whereby the arms can be pivoted with respect to the upper holder thereby permitting the tape cassette lid to be opened and closed.

The tape player of the invention further includes side plates disposed along the side walls of the guide plates to guide the guide plates in the vertical direction and also includes retaining pieces projecting inside the side plates, wherein the aforesaid pins are brought into engagement with the stepped guide slots of the guide plates and are allowed to move along the inclined portions of the stepped guide slots with movement of the holders, whereupon the aforesaid arms are rotated slightly, and with a vertical movement of the guide plates the arms are rotated completely in engagement with the aforesaid retaining pieces to open the aforesaid lid.

Thus, in the above tape player according to the present invention, after slightly rotated by the inclined portions of the guide slots, the arms are rotated completely in engagement with the retaining pieces by a vertical movement of the guide plates, whereby it becomes possible to completely open the tape cassette lid supported by the arms.

A tape player according to the present invention further includes, in addition to the aforesaid lower holder, first pins, upper holder, shift levers and second pins, third pins projecting from the front end-side side wall portions of the upper holder, arms attached rotatably to the upper holder, fourth pins fixed to the arms, and guide plates disposed along the side walls of the lower and upper holders and each having a stepped guide slot continuous through two inclined portions and a linear guide slot formed in parallel with the stepped guide slot, the first and third pins being brought into engagement with the linear guide slots of the guide plates, the second and fourth pins being brought into engagement with the stepped guide slots of the guide plates, wherein the shift levers are pivoted as the second pins move along one said inclined portions with movement of the holders, thereby causing the lower holder to move in the direction opposite to the advancing direction of the tape cassette relative to the upper holder, while the arms are rotated as the fourth pins move along the other of the inclined portions of the guide slots, to thereby open or close the lid.

Thus, in the said tape player according to the present invention, when the second pins move along one inclined portions of the stepped guide slots in the guide plates, the lower holder is moved relative to the upper holder through the shift levers, while when the fourth pins move along the other inclined portions, the arms are rotated, thereby permitting the tape cassette slider and lid to be opened and closed.

### BRIEF DESCRIPTION OF THE DRAWINGS

Fig. 1 is a perspective view showing an outline of a tape cassette commonly used in a conventional digital audio tape player;
Fig. 2 is an exploded perspective view showing a tape cassette loading mechanism according to an embodiment of the present invention;
Figs. 3 and 4 are each an exploded perspective view showing a principal construction in Fig. 2; and
Figs. 5, 6, 7 and 8 are side views showing operating conditions of a principal portion in Fig. 2.

### DETAILED DESCRIPTION OF THE PREFERRED EMBODIMENT

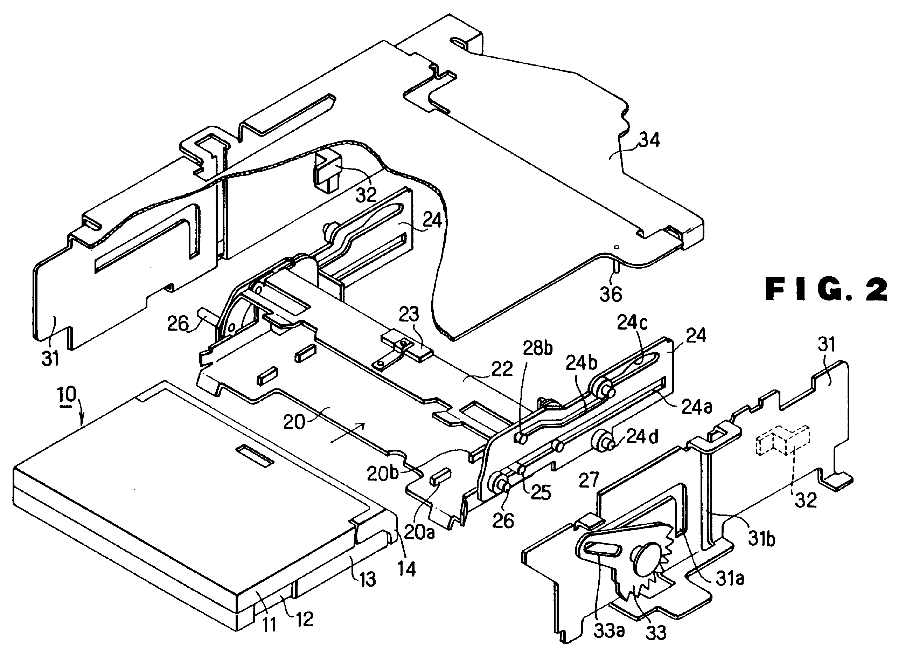

An embodiment of the present invention will be described in detail hereinunder with reference to Figs. 2 to 8.

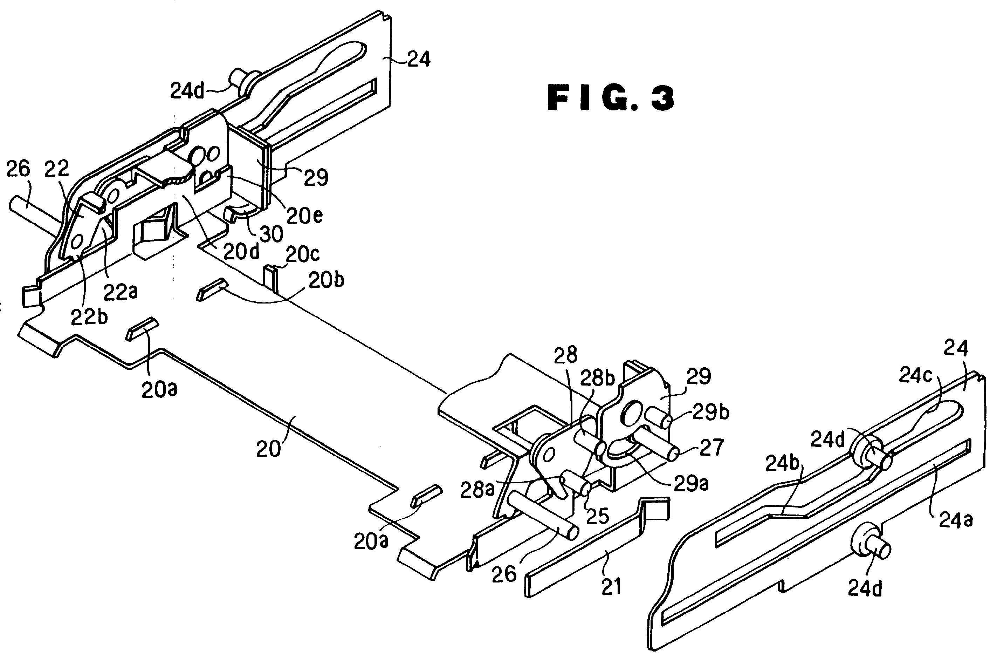

In Fig. 2, the reference numeral 20 denotes a U-shaped lower holder which supports a tape cassette 10. As shown in Fig. 3, two pairs of embossed lugs 20a and 20b are formed on the bottom of the lower holder and a pair of bent pieces 20c are formed at the front portion of the same holder; further, elastic plates 21 are projecting from both side walls of the lower holder. Numeral 22 denotes a U-shaped upper holder which holds the tape cassette 10 in cooperation with the lower holder 20, with a hook 23 being attached to the upper surface of the upper holder which hook is capable of undergoing elastic deformations. The side walls of the upper holder 22 are formed in U shape, each having an intermediate concave portion 22a in which is disposed a convex portion 20d of each side wall of the lower holder 20 through a predetermined moving space. And the opposed faces of each side walls of both holders are formed with arcuate lugs 20e and 22b to reduce the moving friction. Numeral 24 denotes a guide plate and a pair of guide plates 24 are disposed on both sides of the holders 20 and 22. The guide plates 24 are each formed with a linear guide slot 24a, a stepped guide slot 24b which is continuous through inclined portions, and an elliptic guide slot 24c formed at the front end of the guide slot 24b. Further, a pair of pins 24d are formed on the outside faces of the guide plates. Through the guide slots 24a of the guide plates 24 are inserted pins (first pins) 25 attached to the lower holder 20 and pins (third pins) 26 and 27 attached to the upper holder 22.

In Fig. 3, numeral 28 denotes a shift lever attached pivotably to the upper holder 22. The shift lever 28 is formed with a slot 28a for engagement with each pin 25 and with a pin (second pin) 28b for engagement with each guide slot 24b being attached to the shift lever. Numeral 29 denotes an L-shaped arm provided rotatably on the front end side of the upper holder 22; the arm 29 has an arcuate slot 29a for insertion therethrough of each pin 27 and with a pin (fourth pin) 29b for engagement with the guide slots 24b and 24c being attached to the arm 29. Numeral 30 denotes an elastically deformable, L-shaped spring (resilient member) disposed on a free end side of the arm 29 in opposed relation to the bottom of the lower holder 20, and numeral 31 denotes a side plate disposed outside each guide plate 24. The side plate 31 is formed with an L-shaped slot 31a and a vertical slot (31b), with the pins 26 and 24d being in engagement with the slots 31a and 31b, respectively. Numeral 32 denotes an L-shaped retaining piece mounted on the inner wall surface of the plate 31 and numeral 33 denotes an arm attached pivotably to the outer wall surface of the plate 31. The arm 33 is formed with a radially extending guide slot 33a, with which is engaged the pin 26 which has passed through the slot 31a of the plate 31. The outer periphery of the arm 33 is formed with a gear to which is transmitted a driving force from a motor (not shown).

Numeral 34 denotes an upper plate which is mounted so as to connect the side plates 31 and serve as a cover over the upper holder 22. On the inner surface side of the upper plate 34 is formed a link mechanism 35, which link mechanism has a pair of front ends 35a for abutment with the tape cassette 10. Numeral 36 denotes a pin projecting from the upper plate 34 in opposed relation to each L-shaped retaining piece 32.

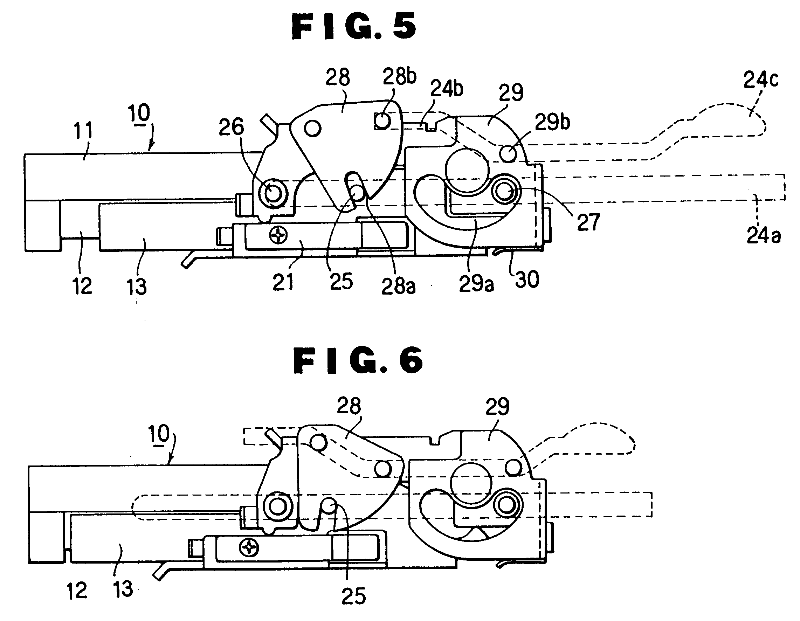

Under the construction described above, when the tape cassette 10 is inserted into the holders 20 and 22, the slider 13 moves along the upper surface of the lower holder 20 and an end face thereof is retained by the bent pieces 20c; at the same time, the lugs 20a and 20b of the lower holder 20 come into opposed relation to the retaining apertures 13a and 13b of the slider 13 and push up the lugs 12a of the lower case 12, so that the lower case becomes movable independently of the slider 13. Consequently, the cases 11 and 12 are pushed in to a further extent than the slider 13 by the inserting force of the tape cassette 10 and its upper surface is pressed by the hook 23, while the front end face of the lid 14 is retained by the springs 30. At this time, the slider 13 is held in a somewhat retracted position with respect to the lower case 12 and the elastic plates 21 are urged against the side wall faces of the slider 13, thus creating an eject state (shown in Fig. 5) holding the tape cassette 10 as a whole.

Next, when the tape cassette 10 is further pushed in for transfer to a playing state (it is not always necessary to once stop in the eject state), the link mechanism 35 is moved by the lid 14 to turn ON a switch (not shown), or by turning ON a switch which is for transfer to the playing state, an electric current is supplied to the motor and the rotating force of the motor is transmitted to the arms 33. With the resultant rotation of the arms 33 the lower and upper holders 20 and 22 are moved along the guide slots 24a and 24b of the guide plates 24, and when the pins 28b of the shift levers 28 move along inclined portions of the guide slots 24b, as shown in Fig. 6, the shift levers 28 are pivoted downwards, whereby the lower holder 20 is moved in the direction opposite to the advancing direction relative to the upper holder 22. At this time, since the slider 13 is retained by the bent pieces 20c of the lower holder 20, the slider 13 is pushed back with respect to the lower case 12, thus permitting transfer to such an open condition of the slider 13 as shown in Fig. 1. The relative movement of the holders 20 and 22 can be done smoothly by abutment of the lugs 20e and 22b. Further, as the arms 33 rotate and push the holders 20 and 22 forward, since the pins 29b of the arms 29 are in engagement with the guide slots 24b of the guide plates 24 and the pins 27 of the upper holder 22 are in engagement with the guide slots 24a of the guide plates 24, the arms 29 are turned about 30 degrees forwardly upward upon movement along inclined portions of the guide slots 24b. At this time, the lid 14 is positioned above the retaining pieces 32 and the pins 26 of the upper holder 22 are each positioned in the intersecting portion of the L-shaped slot 31a of each side plate 31.

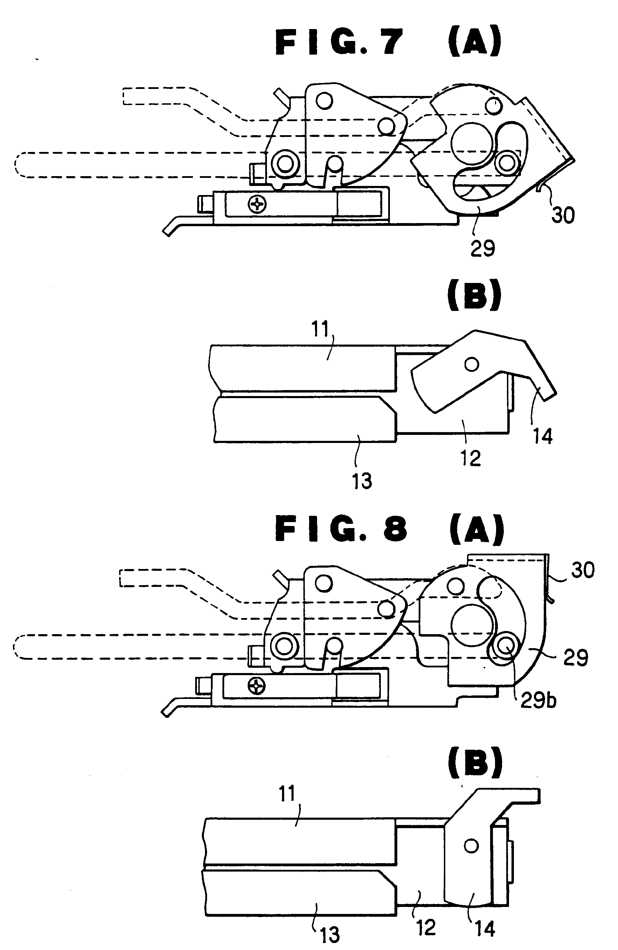

Thereafter, upon further rotation of the arms 33, the pins 26 move downward along the slots 31a and the plates 24 also move downward due to engagement of the pins 24d with the slots 31b, thereby pulling down the tape cassette 10. At this time, the arms 29 are retained by the retaining pieces 32, so the arms further turn and are held in a position turned about 90 degrees with respect to their initial state as shown in Fig. 8, thus causing the magnetic tape to be exposed completely from the cassette case and a guide post (not shown) to be positioned inside the tape. Subsequent movement of the guide post causes the magnetic tape to be pulled out and wound round a rotary cylinder, further causing the reel hubs 15 of the tape cassette 10 to be fitted on the rotating shafts (not shown). The magnetic tape is allowed to travel due to rotation of the rotating shafts. With this travel of the tape, the magnetic head attached to the rotary cylinder detects a signal recorded on the tape.

Where the tape cassette 10 is to be taken out, operation of the eject switch causes the arms 33 to be turned in the reverse direction, so that the guide plates 24 and the holders 20, 22 as a whole move upwards. At this time, in the event the lid 14 is deformed by heat or by any other cause and the lid 14 fails to turn in the closing direction despite the urging force of the spring which urges the lid in the closing direction, the pins 36 come into abutment with the upper surface of the lid 14 and cause the latter to turn in the direction to close the opening of the lower case 12. As the arms 33 further turns, the lid 14 is closed and it becomes possible for the upper case 11 to move to a larger extent than the lower case 12 and return to the initial eject position. If the tape cassette 10 is pulled out in this state, the lugs 12a are pushed in by the lugs 20b and 20a and the upper case 11 moves relative to the slider 13 because the slider is retained by the lugs 20b and 20a and urged toward the lid 14 by the spring. And upon abutment of an end face of the slider 13 with the lid 14, that is, in a completely received state of the magnetic tape, the cassette is drawn out.

There is the advantage that by once holding the tape cassette 10 in the eject state the transfer to the playing state can be done with an electric signal using, for example, a remote control unit.

Thus, in this embodiment of the present invention, the lower and upper holders 20 and 22 which support the slider 13 and the case side respectively of the tape cassette 10 are constituted separately so as to be movable relatively to each other, so it is not necessary to separately provide a drive mechanism for opening the slider 13 of the tape cassette 10. Further, since a concave portion is formed in one of the opposed side walls on each side of the lower and upper holders 20 and 22 and a convex portion formed on the other and those concave and convex portions are engaged with each other through a predetermined moving space, the moving distance of the tape cassette 10 required for opening of the slider 13 can be shortened and consequently the tape cassette inserting depth in the apparatus can be made small. Moreover, since it is not necessary to superpose the side walls of the holders 20 and 22 one on the other laterally, the thickness of each side wall portion can be reduced, thus contributing to the reduction in size of the tape player. Further, since pins 25, 26 and 27 are provided in the same level positions of the concave and convex portions of the lower and upper holders 20 and 22 and they are brought into engagement with the same guide slot 24a of each guide plate 24, it is possible to restrict the height of each guide plate 24 and the guide slots 24b which constitute the opening mechanism of the slider 13 can be disposed in the restricted spaces. Further, the arms 29 are slightly turned by engagement of the pins 29b with the guide slots 24b and thereafter the arms are brought into engagement with the retaining pieces 32 and thereby turned about 90 degrees to open the lid 14. This construction permits smooth turning of the arms 29. Besides, since it is not necessary to provide an inclined portion required for each arm 29 to turn 90 degrees, it is possible to restrict the height of each guide plate 24 and its length in the depth direction. Even in the event the lid 14 fails to turn due to deformation, it can be pushed back by the pins 36 and returned in the direction to close the opening of the cases 11 and 12.

Although the digital audio tape player for automobile has been described in the above embodiment, the present invention can also be applied to a domestic digital audio tape player having a recording function and is further applicable to data recording or reproducing tape players.

According to the present invention, pins attached to arms are brought into engagement with stepped guide slots of guide plates, whereby the arms can be turned as the said pins move along inclined portions of the guide slots, thus permitting the lid of the tape cassette to be opened and closed smoothly. Besides, since the arms are turned by the pins and the stepped guide slots having inclined portions, it is possible to constitute the apparatus compactly without requiring any complicated construction.

Further, according to the present invention, arms are slightly turned by engagement of pins attached to the arms and inclined portions of guide plates and thereafter the arms are brought into engagement with retaining pieces with vertical movement of the holders, thereby allowing the arms to turn completely to open the lid, and therefore the arms can be turned smoothly. Besides, it is possible to restrict the height of each guide plate and its length in the depth direction because the length of each inclined portion is not made large, thereby permitting contribution to the reduction in size of the tape player.

Additionally, according to the present invention, the tape cassette lid can be opened and closed by movement of the upper holder; besides, since the opening/closing mechanism concerned is constructed so as to be guided by two parallel guide slots formed in the guide plates, it is possible to restrict the vertical and longitudinal sizes of the guide plates, thus permitting the reduction in size of the apparatus.

## Claims

1. A tape cassette loading mechanism in a tape player for loading a tape cassette (10) which encloses a magnetic tape therein by means of an upper case (11), a lower case (12), a slider (13) mounted slidably on the lower case (12) and a lid (14) mounted pivotably with respect to said cases (11, 12), said tape cassette loading mechanism including a cassette holding means (20, 22) comprising a U-shaped lower holder (20) for supporting the slider (13) of the tape cassette (10) and a U-shaped upper holder (22) for supporting the upper case (11) of the tape cassette (10), and further including lid opening and closing means;
characterized in that said upper holder (22) is formed separately from the lower holder (20) and
said lid opening and closing means comprises
L-shaped arms (29) mounted rotatably on the front end side of said upper holder (22);
pins (29b) respectively mounted outside said L-shaped arms (29);
resilient members (30) mounted respectively on free end sides of said arms (29) and engageable with the lower end face of said lid (14); and
guide plates (24) disposed along the side walls of said lower and upper holders (20, 22) and each having a stepped guide slot (24b) continuous through an inclined portion and also having a linear guide slot (24a),
said pins (29b) being brought into engagement respectively with said stepped guide slots (24b) of said guide plates (24), whereby said arms (29) are turned when said pins (29b) move along said inclined portions with movement of said holders (20, 22), to open or close said lid (14).

2. A tape cassette loading mechanism according to claim 1, further including:
side plates (31) disposed respectively along the side walls of said guide plates (24) to guide the guide plates (24) vertically; and
retaining pieces (32) respectively projecting inside said side plates (31),
wherein said arms (29) are slightly turned when said pins (29b) move along said inclined portions with movement of said holders (20,22) and at the same time said arms (29) are brought into engagement with said retaining pieces (32) by said vertical movement of said guide plates (24), thereby causing said arms (29) to turn completely to open said lid (14).

## Patentansprüche

1. Bandkassettenlademechanismus in einem Kassettenabspielgerät zum Laden einer Bandkassette (10), die in sich ein magnetisches Band mit Hilfe eines oberen Gehäuses (11), eines unteren Gehäuses (12), eines gleitend auf dem unteren Gehäuse (12) angebrachten Schiebers (13) und eines gegenüber dem Gehäuse (11, 12) drehbar angebrachten Deckels (14) einschließt, wobei der Bandkassettenlademechanismus Kassettenhaltemittel (20, 22) mit einem U-förmigen unteren Halter (20) zum Halten des Schiebers (13) der Kassette (10) und einem U-förmigen oberen Halter (22) zum Halten des oberen Gehäuses (11) der Bandkassette (10) und außerdem Deckelöffnungs- und Schließmittel enthält;
dadurch gekennzeichnet, daß der obere Halter (22) getrennt vom unteren Halter (20) gebildet ist und daß
die Deckelöffnungs- und Schließmittel drehbar an der Vorderseite des oberen Halters (22) angebrachte L-förmige Arme (29);
jeweils außerhalb der L-förmigen Arme (29) angebrachte Stifte (29b);
federnde Elemente (30), die jeweils an den freien Enden der Arme (29) angebracht und mit der Unterseite des Deckels (14) in Eingriff bringbar sind; und
Führungsplatten (24), die entlang der Seitenwände des unteren und des oberen Halters (20, 22) angeordnet sind und jeweils einen durch einen geneigten Abschnitt fortgesetzten, gestuften Führungsschlitz (24b) und einen geraden Führungsschlitz (24a) besitzen,
aufweisen,
wobei die Stifte (29b) jeweils in die gestuften Schlitze (24b) der Führungsplatten (24) eingreifen, wodurch die Arme (29) gedreht werden, wenn sich die Stifte (29b) mit einer Bewegung der Halter (20, 22) entlang der geneigten Abschnitte bewegen, um den Deckel (14) zu öffnen oder zu schließen.

2. Bandkassettenlademechanismus gemäß Anspruch 1, außerdem mit Seitenplatten (31), welche jeweils entlang der Seitenwände der Führungsplatten (24) angeordnet sind, um die Führungsplatten (24) vertikal zu führen; und
Rückhaltestücke (32), welche jeweils in die Seitenplatten (31) hineinragen,
wobei die Arme (29) etwas gedreht werden, wenn sich die Stifte (29b) bei Bewegung der Halter (20, 22) entlang der geneigten Abschnitte bewegen und gleichzeitig die Arme (29) mit den Rückhaltestücken (32) durch die Vertikalbewegung der Führungsplatten (24) in Eingriff gebracht werden und dadurch die Arme (29) dazu veranlassen, den Deckel (14) vollständig aufzuklappen.

## Revendications

1. Mécanisme de chargement de cassette à bande dans un lecteur de bande pour charger une cassette à bande (10) qui renferme une bande magnétique au moyen d'un boîtier supérieur (11), d'un boîtier inférieur (12), d'un organe mobile (13) monté en glissement sur le boîtier inférieur 12 et d'un couvercle (14) monté en pivotement par rapport auxdits boîtiers (11, 12), ledit mécanisme de chargement de cassette à bande comportant des moyens de maintien (20, 22) de la cassette comprenant un support inférieur en forme de U (20) pour soutenir l'organe mobile (13) de la cassette à bande (10) et un support supérieur en forme de U (22) pour soutenir le boîtier supérieur (11) de la cassette à bande (10) et comportant de plus des moyens d'ouverture et de fermeture du couvercle;
caractérisé en ce que ledit support supérieur (22) est séparé du support inférieur (20) et
lesdits moyens d'ouverture et de fermeture du couvercle comprennent des bras en forme de L (29) montés en rotation sur la face avant dudit support supérieur (22);
des ergots (29b) respectivement montés à l'extérieur desdits bras en forme de L (29);
des éléments élastiques (30) respectivement montés sur les extrémités libres desdits bras (29) et qui peuvent s'engager sur la face inférieure dudit couvercle (14); et
des plaques de guidage (24) disposées le long des parois latérales desdits supports inférieur et supérieur (20, 22), chacune comportant une fente de guidage en gradins (24b) en continu grâce à une partie inclinée ainsi qu'une fente de guidage linéaire (24a),
lesdits ergots (29b) s'engageant respectivement dans lesdites fentes de guidage en gradins (24b) desdites plaques de guidage (24), permettant auxdits bras (29) de tourner quand lesdits ergots (29b) se déplacent le long desdites parties inclinées lors du mouvement desdits supports (20, 22), pour ouvrir ou fermer le couvercle (14).

2. Mécanisme de chargement de cassette à bande selon la revendication 1, comportant de plus:
des plaques latérales (31) disposées respectivement le long des parois latérales desdites plaques de guidage (24) pour guider verticalement les plaques de guidage (24); et
des pièces de retenue (32) dépassant respectivement à l'intérieur desdites plaques latérales (31),
dans lequel lesdits bras (29) tournent légèrement quand lesdits ergots (29b) se déplacent le long des parties inclinées lors du mouvement desdits supports (20, 22) et en même temps lesdits bras s'engagent sur lesdites pièces de retenue (32) sous l'effet dudit mouvement vertical desdites plaques de guidage (24), faisant ainsi tourner complètement lesdits bras (29) pour ouvrir ledit couvercle (14).
